# FASCICULE DE BREVET EUROPEEN

(11) **EP 2 738 096 B1**
(45) Date de publication et mention de la délivrance du brevet: **02.01.2019**
(21) Numéro de dépôt: 13194376.3
(22) Date de dépôt: 26.11.2013
(51) Int. Cl.: B64D 11/06, A47C 7/40, B60N 2/22

(54) **DOSSIER DE SIÈGE D'AÉRONEF COMPRENAND UNE COLONNE STRUCTURALE PORTANT DES DISPOSITIFS TRANSVERSAUX DE SUPPORT DE L'OCCUPANT**
RÜCKENLEHNE EINES LUFTFAHRZEUGSITZES, DIE EINE STRUKTURELLE SÄULE MIT QUERVORRICHTUNGEN ZUR STÜTZUNG DES PASSAGIERS AUF DIESEM SITZ UMFASST
AIRCRAFT SEAT BACK INCLUDING A STRUCTURAL COLUMN COMPRISING TRANSVERSE DEVICES FOR SUPPORTING THE OCCUPANT

(30) Priorité: 28.11.2012 FR 1261341
(43) Date de publication de la demande: 04.06.2014
(73) Titulaire: Airbus Opérations SAS, 31060 Toulouse (FR)
(72) Inventeur: Guering, Bernard, 31850 Montrabe (FR)
(74) Mandataire: Ilgart, Jean-Christophe

(56) Documents cités:
- EP-A2- 1 693 248
- WO-A1-02/102203
- WO-A1-2012/149978

## Description

### DOMAINE TECHNIQUE

La présente invention se rapporte au domaine des sièges d'aéronef, en particulier des sièges équipant le compartiment passager des avions commerciaux, ce compartiment étant généralement dénommé « cabine » de l'aéronef.

L'invention concerne plus particulièrement l'amélioration de la conception du dossier de ces sièges d'aéronef.

### ETAT DE LA TECHNIQUE ANTERIEURE

Dans les aéronefs existants, les dossiers de siège présentent habituellement une partie structurale, par exemple en forme de cadre, sur lequel sont rapportés de nombreux éléments comme des coussins prévus pour apporter du confort aux occupants de ces sièges. Un tel siège d'avion commercial est par exemple connu du document US 2010/0308166.

Cette conception, bien que largement répandue, présente une masse et un encombrement élevés, principalement en raison du volume important de la partie structurale. En outre, le confort de l'occupant est à optimiser. A cet égard, il existe notamment un besoin d'assurer une reprise plus homogène de la pression exercée par l'occupant sur le dossier du siège.

Le document WO 02/102203 montre aussi un siège d'avion connu de l'état de la technique.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un dossier de siège d'aéronef comprenant une colonne structurale portant une pluralité de dispositifs de support d'un occupant du siège, lesdits dispositifs de support étant répartis le long de la colonne structurale et orientés transversalement par rapport à celle-ci de façon à faire chacun saillie de part et d'autre de cette colonne.

De plus, les moyens de fixation comprennent une pluralité de segments pouvant pivoter les uns par rapport aux autres, dont un segment central monté sur la colonne structurale, de manière à pivoter par rapport à celle-ci, lesdits moyens de support comprenant également, montés respectivement aux deux extrémités opposées du segment central, deux segments latéraux pouvant pivoter par rapport au segment central. Enfin, chaque dispositif de support présente une souplesse suffisante pour pouvoir se déformer élastiquement sous l'effet de la pression du dos d'un occupant en appui sur le dossier.

L'invention proposée est en totale rupture avec les conceptions antérieures dans le domaine de l'aéronautique, cette rupture résultant en particulier de la mise en oeuvre d'une partie structurale en forme de colonne, assimilable à la colonne vertébrale du dossier de siège. Cette conception est propice à une réduction de masse et d'encombrement, ce dernier étant en particulier réduit de part et d'autre de la colonne structurale, offrant avantageusement un gain de place pour les jambes de l'occupant situé derrière ce siège.

Par ailleurs, la multiplicité des dispositifs de support de l'occupant contribue à l'obtention d'un meilleur confort, puisque chaque dispositif rapporté sur la colonne structurale peut ainsi s'adapter localement à la topologie, à savoir au relief du dos de l'occupant. Il en découle une reprise plus homogène de la pression exercée par l'occupant sur le dossier du siège.

En outre, la segmentation des éléments de confort du dossier, c'est-à-dire des dispositifs de support, permet une meilleure aération, et limite par conséquent les risques de transpiration dus à des échauffements locaux. Cette segmentation réduit également la masse globale du dossier. Les avantages précités sont encore plus notables lorsque lesdits dispositifs de support sont espacés les uns des autres le long de la colonne structurale. Dans une telle configuration préférentielle, les espaces entre les dispositifs de support sont laissés libres, et donc visibles depuis l'extérieur du siège. Alternativement, ces espaces peuvent, pour au moins certains d'entre eux, être fonctionnalisés par exemple en implantant des éléments vibrants destinés à assurer le massage du dos.

Comme évoqué ci-dessus, le dossier comporte, associés à chaque dispositif de support, des moyens de fixation de ce dispositif sur la colonne structurale. Les dispositifs de support peuvent donc être remplacés indépendamment les uns les autres, pour un gain en termes de coûts.

En outre, la multiplicité des segments permet de s'adapter au mieux localement à la topologie. Avec la réalisation proposée, chaque dispositif de support peut alors se déformer de multiples manières en fonction de l'effort exercé par l'occupant, cette déformation le long du dispositif pouvant par exemple prendre la forme d'une courbure, voire de deux courbures successives et inversées de manière à présenter un point d'inflexion. Dans ce dernier cas, chaque dispositif peut ainsi se déformer librement en accompagnant le mouvement de torsion de l'occupant. Cela est permis notamment grâce à au moins l'un des segments des moyens de fixation présentant une souplesse suffisante pour se déformer sous l'effort exercé par l'occupant assis dans le siège.

De préférence, chacun des segments latéraux est monté à ses deux extrémités opposées sur le dispositif de support associé, les deux extrémités opposées de chaque segment latéral pouvant de préférence pivoter par rapport au dispositif de support.

A cet égard, il est noté que les fonctions de pivotement sont de préférence obtenues par des liaisons pivots ou des articulations, mais que d'autres moyens similaires peuvent cependant être adoptés, telles que des liaisons souples, par exemple en élastomère. Au sein de mêmes moyens de fixation, les axes de pivotement sont de préférence tous sensiblement parallèles.

De préférence, les moyens de fixation de chaque dispositif de support adoptent une forme générale bombée vers l'arrière, ces moyens étant préférentiellement fixés entre la colonne et les dispositifs de support de l'occupant. Par conséquent, à partir de la colonne structurale et de part et d'autre de celle-ci, le dossier s'étend donc latéralement en allant vers l'avant, ce qui contribue à libérer encore davantage de place pour les jambes de l'occupant situé derrière le siège.

Selon l'invention, tous les segments des moyens de fixation d'un dispositif de support sont sensiblement agencés dans un même plan, qui est préférentiellement sensiblement orthogonal localement à la colonne structurale. De plus, les axes de pivotement des segments sont également sensiblement orthogonaux à ce plan.

De préférence, chaque dispositif de support prend la forme d'une latte transversale. Cette latte est donc capable de se déformer élastiquement, pour s'adapter à la pression exercée par le dos de l'occupant.

De préférence, chaque latte transversale comprend une portion en mousse, de préférence entourant une âme de la latte.

De préférence, les lattes forment la surface extérieure du dossier avec laquelle l'occupant du siège est destiné à être en contact. Une housse recouvrant l'ensemble de ces lattes est également envisageable, sans sortir du cadre de l'invention.

Très préférentiellement, pour des raisons de confort, chaque dispositif de support présente une souplesse suffisante pour pouvoir se déformer élastiquement sous l'effet de la pression du dos d'un occupant en appui sur le dossier.

Enfin, lesdits dispositifs de support sont de préférence dépourvus de contact direct avec ladite colonne structurale, car espacés de celle-ci par lesdits moyens de fixation. Par conséquent, le dos de l'occupant est éloigné de la colonne structurale, et le confort renforcé. Aussi, cet écartement des dispositifs de support offre une plus grande liberté de déformation, notamment durant les mouvements de torsion du dos.

L'invention a également pour objet un siège d'aéronef comprenant un dossier tel que décrit ci-dessus.

Elle a aussi pour objet un aéronef comprenant au moins un tel siège, qui est de préférence un siège cabine pour le compartiment passager de l'aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'une partie d'un compartiment passager d'un avion commercial, le compartiment étant équipé de sièges cabine selon un mode de réalisation préféré de l'invention ;
- la figure 2 montre une vue de côté de l'un des sièges montrés sur la figure 1 ;
- la figure 3 représente une vue agrandie en perspective d'une partie du dossier du siège de la figure 2 ;
- la figure 4 représente une vue de dessus du siège montré sur les figures 2 et 3 ;
- la figure 5 est une vue en coupe prise selon le plan P de la figure 3 ; et
- les figures 6a à 6e montrent schématiquement, de dessus, l'une des lattes du dossier de siège selon différentes configurations en fonction de la pression exercée par l'occupant.

### EXPOSÉ DÉTAILLÉ DE MODES DE RÉALISATION PRÉFÉRÉS

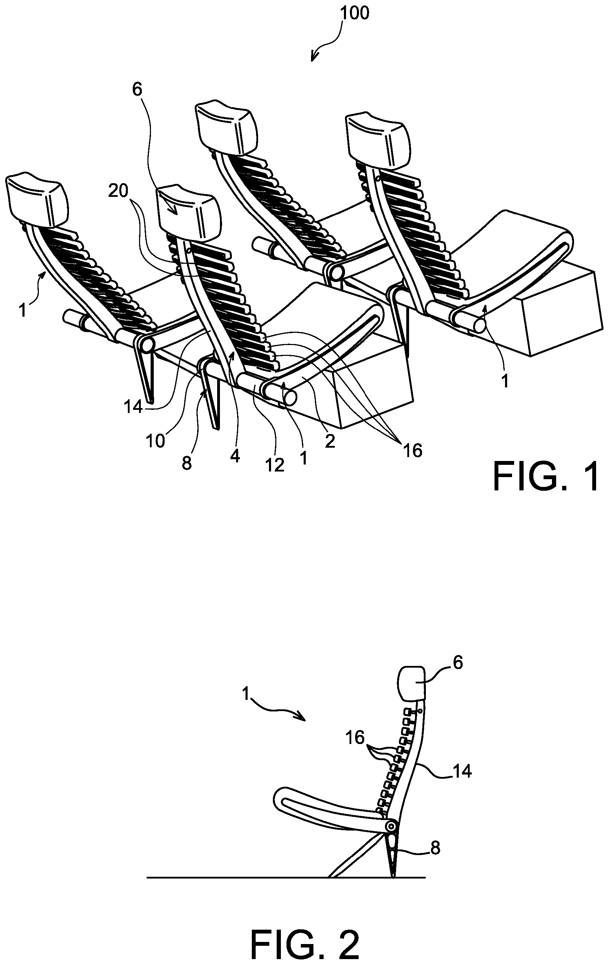

En référence tout d'abord à la figure 1, il est représenté une partie d'un compartiment passager 100 d'un avion commercial, équipé de sièges cabine 1 selon la présente invention. Les sièges 1 sont agencés en rangées, d'une manière conventionnelle.

Chaque siège 1 comporte une assise 2, un dossier 4, un appui-tête 6, ainsi que des moyens 8 permettant de fixer le siège sur le plancher du compartiment cabine. L'assise 2 et l'appui-tête 6 présentent chacun une forme conventionnelle.

Les moyens 8 comprennent des pieds 10 destinés à être raccordés à des rails du plancher, ainsi qu'un arbre transversal 12 porté par les pieds 10 et sur lequel l'assise 2 est articulée, de manière à pouvoir faire pivoter le dossier selon l'axe de cet arbre. Le dossier 4 est solidaire de l'arbre 12. Il comprend une colonne structurale 14 s'étendant sensiblement verticalement à partir de l'arbre 12, depuis une zone centrale de celui-ci. Ces deux éléments peuvent être rapportés l'un sur l'autre, ou bien réalisés d'une seule pièce, de préférence en matériau métallique ou en matériau composite. Une autre possibilité peut consister à prévoir l'arbre 12 solidaire de l'assise 2, et une articulation de l'extrémité inférieure de la colonne 14 sur cet arbre 12, toujours dans le but de pouvoir faire pivoter le dossier relativement à l'assise, selon l'axe de l'arbre 12.

Globalement, le dossier 4 comprend la colonne structurale 14 à l'extrémité de laquelle est fixé l'appui-tête 6, ainsi que des dispositifs 16 de support de l'occupant, et, enfin, des moyens de fixation 20 de ces dispositifs sur la colonne 14 formant l'ossature du dossier. Le dossier 4 présente une structure de forme générale squelettique, rompant totalement avec les conceptions de siège d'avion de l'art antérieur.

La colonne structurale 14 présente une section fermée, par exemple carrée ou rectangulaire, éventuellement avec les bords arrondis. Néanmoins, d'autres sections ouvertes peuvent être envisagées, par exemple en forme de U. La colonne 14 présente par ailleurs une forme générale courbe, voire à double courbure comme cela est montré sur la figure 1, de manière à suivre la forme du dos de l'occupant assis dans le siège.

En référence à présent conjointement aux figures 1 à 5, il est montré plus en détail le dossier 4 du siège 1.

Tout d'abord, la forme générale squelettique est obtenue avec des dispositifs de support 16 agencés transversalement par rapport à la colonne 14 sur laquelle ils sont montés, en faisant saillie de part et d'autre de celle-ci, de préférence de manière symétrique par rapport à la colonne. Chaque dispositif 16 prend de préférence la forme d'un élément allongé s'étendant transversalement, réalisé à l'aide d'un ou plusieurs corps imbriqués, et s'apparente ici à une latte. La section de cette latte 16 peut être de différentes formes, par exemple sensiblement carrée ou sensiblement rectangulaire, éventuellement avec les bords arrondis.

Selon un exemple de réalisation, le rapport entre la longueur de la latte souple et la largeur de celle-ci est compris entre 5 et 20. Les lattes 16 sont réparties le long de la colonne 14, sans être en contact direct avec celle-ci, puisque les moyens de fixation 20 sont interposés entre eux. Comme cela est visible sur les figures précitées, les lattes 16, situées en avant par rapport à la colonne formant la partie arrière du dossier, sont espacées les unes des autres le long de la colonne. Elles sont parallèles les unes aux autres, et parallèles au bord inférieur de l'appui-tête ainsi qu'au bord de l'assise.

Les espaces inter-lattes peuvent s'étendre sur une hauteur comprise entre 0,3 et 3 fois la hauteur des lattes. A l'état final du siège, ces espaces inter-lattes sont de préférence conservés à des fins d'aération du dossier, et visibles depuis l'extérieur du siège, à moins qu'une housse ne soit prévue pour recouvrir l'ensemble. Alternativement, ces espaces peuvent intégrer des éléments (non représentés) avec différentes fonctions, par exemple des éléments vibrants pour le massage du dos de l'occupant assis dans le siège 1.

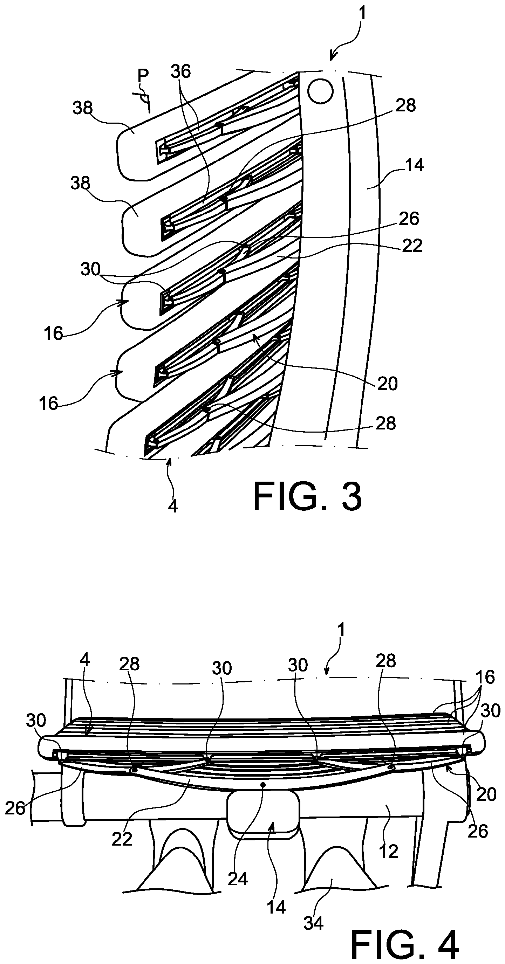

Comme cela est le mieux visible sur la figure 4, pour chaque latte 16, les moyens de fixation sur la colonne 14 prennent la forme d'une pluralité de segments articulés, de préférence également métalliques ou en matériau composite. Les articulations des segments sont prévues pour accompagner la déformation des lattes 16, qui présentent une souplesse suffisante pour pouvoir se déformer élastiquement sous l'effet de la pression du dos d'un occupant assis dans le siège et en appui sur le dossier. Cette déformation de la latte 16 permet ainsi à celle-ci de s'adapter à la forme du dos de l'occupant.

Ici, les segments sont de préférence tous agencés dans un même plan, de préférence orthogonal localement à la colonne 14, plan dans lequel la latte 16 associée est également agencée.

Parmi ces segments, il est prévu un segment central 22 bombé vers l'arrière, et dont la zone médiane est montée pivotante sur la colonne 14, par le biais d'une liaison pivot 24. Par exemple, le segment central 22 présente une forme en arc de cercle. Aux extrémités opposées de ce segment 22, il est prévu respectivement deux segments latéraux 26, chacun également bombé vers l'arrière, et dont la zone médiane est montée pivotante sur son extrémité associée du segment 22, par le biais d'une liaison pivot 28. Ici aussi, chaque segment latéral 26 présente une forme en arc de cercle, de rayon préférentiellement inférieur à celui du segment 22.

Les deux extrémités opposées de chacun des segments latéraux 26 sont montées sur la latte 16 associée, également de façon pivotante par l'intermédiaire de liaisons pivot 30. Il s'agit par conséquent de quatre liaisons pivot 30, toutes agencées le long d'une ligne transversale du plan unique traversant les moyens de fixation 20, l'écartement des deux liaisons les plus éloignées étant sensiblement identique à la largeur du dossier, ou légèrement inférieur à celle-ci.

Avec cette configuration, les moyens de fixation 20 formés par l'assemblage des segments 22, 26 adoptent une forme générale bombée vers l'arrière, avec une partie médiane qui est celle qui se projette le plus vers l'arrière en raison de la symétrie par rapport à la colonne 14 à l'avant de laquelle ces moyens sont articulés, via la liaison 24. Par conséquent, à partir de la colonne structurale 14 et de part et d'autre de celle-ci, le dossier 4 s'étend donc latéralement en allant vers l'avant comme cela est le mieux visible sur la figure 4, ce qui contribue à libérer une place importante pour les jambes 34 de l'occupant situé derrière le siège 1.

Les axes de rotation des liaisons pivot 24, 28, 30 sont, selon l'invention, parallèles, et orthogonaux au plan unique. Par conséquent, en réponse aux efforts appliqués par l'occupant sur le dossier, les segments articulés 22, 26 sont amenés à se déplacer par pivotement au sein de ce même plan unique, traversant la latte associée 16. Durant cette sollicitation, une déformation élastique d'au moins une partie des segments 22, 26 est également possible, même si leur souplesse reste de préférence largement inférieure à celle des lattes, qui sont quant à elles prévues pour se déformer beaucoup plus facilement afin de s'adapter au relief du dos de l'occupant. Par déformation, il est ici entendu la modification de la forme linéaire des éléments concernés, ceux-ci étant susceptibles de subir une courbure, une accentuation de courbure, un aplanissement, voire de subir une double courbure pour la latte, comme cela sera explicité ci-après.

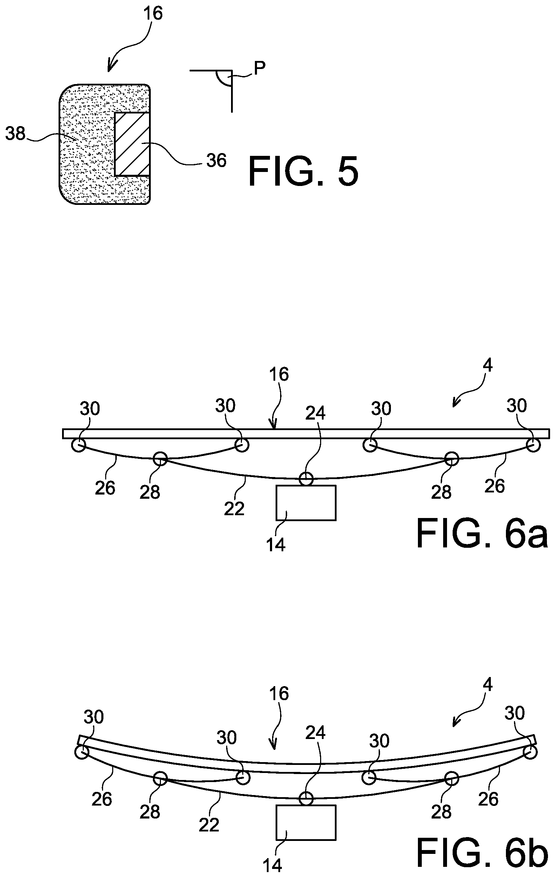

En référence plus spécifiquement aux figures 3 et 5, il est noté que chaque latte 16, qui n'est pas nécessairement en bois, peut présenter une âme intérieure 36 sur laquelle sont articulés les segments latéraux 26, l'âme étant recouverte d'une portion en mousse 38 apportant le confort à l'occupant. L'âme 36 peut quant à elle être réalisée en aluminium ou dans l'un de ses alliages, ou encore en fibre de carbone. Une solution en titane ou en acier est également possible, sans sortir du cadre de l'invention. La portion en mousse 38 fait ainsi office d'habillage pour le dossier du siège. Ici, la surface extérieure du dossier avec laquelle l'occupant est destiné à être en contact est ainsi formée par cette portion en mousse 38 recouvrant l'âme 36 sur toute la longueur de la latte, dans le sens transversal du dossier.

La figure 6a montre une vue schématique de l'une des lattes 16 à l'état non contraint, tel qu'également représenté sur les figures précédentes.

La figure 6b montre une déformation de la latte 16 dans une configuration conventionnelle où l'occupant repose sur le siège 1, en étant assis de façon centrée par rapport à la colonne 14. Dans ce cas de figure, la forme sensiblement droite de la latte non contrainte se déforme pour adopter une courbure vers l'arrière. Cette déformation de la forme linéaire de la latte est autorisée par le pivotement symétrique des deux segments latéraux 26, le segment central 22 restant quant à lui immobile par rapport à la colonne.

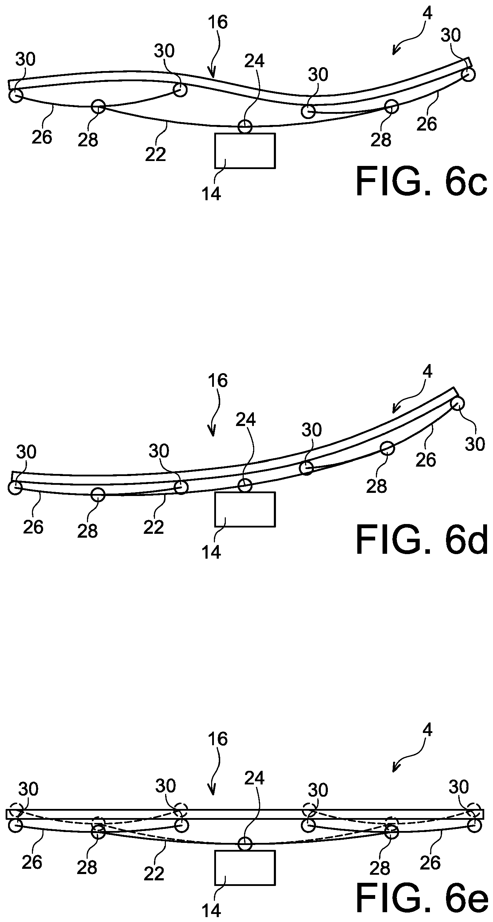

La figure 6c montre un cas de torsion du dos de l'occupant, notamment observé lorsque celui-ci tourne la tête vers le côté ou vers l'arrière. Cela provoque une double courbure sur la latte 16, avec un point d'inflexion 40 entre les deux courbures inversées en forme de S étiré. Cette inversion de courbure s'opère avantageusement sans désagrément pour l'occupant, car la latte 16 n'est préférentiellement pas au contact de la colonne, et peut se déformer librement en accompagnant le mouvement de torsion de cet occupant, sans jamais venir en appui sur cette colonne. Cette déformation de la forme linéaire de la latte est autorisée par le pivotement non symétrique des deux segments latéraux 26, le segment central 22 pouvant quant à lui rester immobile par rapport à la colonne.

La figure 6d montre une déformation de la latte 16 dans une configuration où l'occupant repose sur le siège 1 en n'étant pas centré, mais déporté légèrement sur la gauche du dossier par rapport à la colonne 14. Dans ce cas de figure, la forme sensiblement droite de la latte non contrainte se déforme pour adopter une courbure vers l'arrière et vers la droite. Cette déformation de la forme linéaire de la latte est autorisée par le pivotement non symétrique des deux segments latéraux 26, ainsi que par le pivotement du segment central 22 selon sa liaison 24 avec la colonne.

Enfin, la figure 6e montre de façon schématique que si l'effort exercé par l'occupant sur le dossier est élevé, les segments 22, 26 peuvent eux aussi se déformer en s'aplanissant, les pointillés sur cette figure correspondant à leur état plus bombé, non contraint.

Les figures 6a à 6e montrent différents comportements possibles pour une latte, étant entendu qu'au sein d'un même dossier 4, les lattes 16 et leurs moyens de fixation 20 peuvent présenter des souplesses différentes, adaptées au mieux à la zone du dos à supporter.

Bien entendu, diverses modifications peuvent être apportées par l'homme du métier à l'invention qui vient d'être décrite, uniquement à titre d'exemples non limitatifs. En particulier, il a été décrit un mode de réalisation dans lequel les moyens de fixation comprennent trois segments articulés, mais un nombre supérieur de segments est envisageable, principalement en vue d'obtenir une plus grande liberté de déformation pour les dispositifs de support de l'occupant.

## Revendications

1. Dossier (4) de siège d'aéronef comprenant une colonne structurale (14) portant une pluralité de dispositifs (16) de support d'un occupant du siège, lesdits dispositifs de support (16) étant répartis le long de la colonne structurale (14) et orientés transversalement par rapport à celle-ci de façon à faire chacun saillie de part et d'autre de cette colonne, ledit dossier comportant, associés à chaque dispositif de support (16), des moyens de fixation (20) de ce dispositif sur la colonne structurale (14),
**caractérisé en ce que** lesdits moyens de fixation (20) comprennent une pluralité de segments (22, 26) tous agencés dans un même plan sensiblement orthogonal localement à la colonne (14), lesdits segments (22, 26) pouvant pivoter les uns par rapport aux autres selon des axes de rotation orthogonaux audit plan, ladite pluralité de segments comprenant un segment central (22) monté sur la colonne structurale (14), de manière à pivoter par rapport à celle-ci également selon un axe de rotation orthogonal audit plan, lesdits moyens de support (20) comprenant également, montés respectivement aux deux extrémités opposées du segment central (22), deux segments latéraux (26) pouvant pivoter par rapport au segment central, et **en ce que** chaque dispositif de support (16) présente une souplesse suffisante pour pouvoir se déformer élastiquement sous l'effet de la pression du dos d'un occupant en appui sur le dossier.

2. Dossier selon la revendication 1, **caractérisé en ce que** chacun des segments latéraux (26) est monté à ses deux extrémités opposées sur le dispositif de support associé (16), les deux extrémités opposées de chaque segment latéral pouvant de préférence pivoter par rapport au dispositif de support.

3. Dossier selon l'une quelconque des revendications 1 et 2, **caractérisé en ce qu'**au moins l'un des segments (22, 26) des moyens de fixation (20) présente une souplesse suffisante pour se déformer sous l'effort exercé par l'occupant assis dans le siège.

4. Dossier selon l'une quelconque des revendications précédentes, **caractérisé en ce que** les moyens de fixation (20) de chaque dispositif de support (16) adoptent une forme générale bombée vers l'arrière.

5. Dossier selon l'une quelconque des revendications précédentes, **caractérisé en ce que** lesdits dispositifs de support (16) sont espacés les uns des autres le long de la colonne structurale (14).

6. Dossier selon l'une quelconque des revendications précédentes, **caractérisé en ce que** chaque dispositif de support (16) prend la forme d'une latte transversale.

7. Dossier selon la revendication 6, **caractérisé en ce que** chaque latte transversale comprend une portion en mousse (38), de préférence entourant une âme de la latte (36).

8. Dossier selon l'une quelconque des revendications précédentes, **caractérisé en ce que** lesdits dispositifs de support (16) sont dépourvus de contact direct avec ladite colonne structurale (14).

9. Siège d'aéronef (1) comprenant un dossier (4) selon l'une quelconque des revendications précédentes.

10. Aéronef comprenant au moins un siège (1) selon la revendication 9, de préférence un siège cabine.

## Patentansprüche

1. Rückenlehne (4) eines Luftfahrzeugsitzes, die eine tragende Säule (14) enthält, welche eine Vielzahl von Stützvorrichtungen (16) eines Insassen des Sitzes trägt, wobei die Stützvorrichtungen (16) entlang der tragenden Säule (14) verteilt und quer bezüglich dieser ausgerichtet sind, um je zu beiden Seiten dieser Säule vorzustehen, wobei die Rückenlehne jeder Stützvorrichtung (16) zugeordnet Befestigungseinrichtungen (20) dieser Vorrichtung an der tragenden Säule (14) aufweist,
**dadurch gekennzeichnet, dass** die Befestigungseinrichtungen (20) eine Vielzahl von Segmenten (22, 26) enthalten, die alle in einer gleichen Ebene lokal orthogonal zur Säule (14) angeordnet sind, wobei die Segmente (22, 26) zueinander gemäß Drehachsen orthogonal zur Ebene schwenken können, wobei die Vielzahl von Segmenten ein zentrales Segment (22) enthalten, das so auf die tragende Säule (14) montiert ist, dass es bezüglich dieser ebenfalls gemäß einer Drehachse orthogonal zur Ebene schwenkt, wobei die Stützeinrichtungen (20) ebenfalls, an die zwei gegenüberliegenden Enden des zentralen Segments (22) montiert, zwei seitliche Segmente (26) enthalten, die bezüglich des zentralen Segments schwenken können, und dass jede Stützvorrichtung (16) eine ausreichende Biegsamkeit aufweist, um sich unter der Wirkung des Drucks des Rückens eines Insassen in Auflage gegen die Rückenlehne elastisch verformen zu können.

2. Rückenlehne nach Anspruch 1, **dadurch gekennzeichnet, dass** jedes der seitlichen Segmente (26) an seinen zwei gegenüberliegenden Enden auf die zugeordnete Stützvorrichtung (16) montiert ist, wobei die zwei gegenüberliegenden Enden jedes seitlichen Segments vorzugsweise bezüglich der Stützvorrichtung schwenken können.

3. Rückenlehne nach einem der Ansprüche 1 und 2, **dadurch gekennzeichnet, dass** mindestens eines der Segmente (22, 26) der Befestigungseinrichtungen (20) eine ausreichende Biegsamkeit aufweist, um sich unter der vom auf dem Sitz sitzenden Insassen ausgeübten Kraft zu verformen.

4. Rückenlehne nach einem der vorhergehenden Ansprüche, **dadurch gekennzeichnet, dass** die Befestigungseinrichtungen (20) jeder Stützvorrichtung (16) eine allgemein nach hinten gewölbte Form annehmen.

5. Rückenlehne nach einem der vorhergehenden Ansprüche, **dadurch gekennzeichnet, dass** die Stützvorrichtungen (16) entlang der tragenden Säule (14) einen Abstand zueinander haben.

6. Rückenlehne nach einem der vorhergehenden Ansprüche, **dadurch gekennzeichnet, dass** jede Stützvorrichtung (16) die Form einer Querlatte annimmt.

7. Rückenlehne nach Anspruch 6, **dadurch gekennzeichnet, dass** jede Querlatte einen Abschnitt aus Schaumstoff (38) enthält, der vorzugsweise einen Kern der Latte (36) umgibt.

8. Rückenlehne nach einem der vorhergehenden Ansprüche, **dadurch gekennzeichnet, dass** die Stützvorrichtungen (16) keinen direkten Kontakt mit der tragenden Säule (14) haben.

9. Luftfahrzeugsitz (1), der eine Rückenlehne (4) nach einem der vorhergehenden Ansprüche enthält.

10. Luftfahrzeug, das mindestens einen Sitz (1) nach Anspruch 9 enthält, vorzugsweise einen Kabinensitz.

## Claims

1. Aircraft seat back (4) including a structural column (14) comprising a plurality of devices (16) for supporting an occupant of the seat, said support devices (16) being distributed along the structural column (14) and oriented transversely relative thereto such as to cause each to project on either side of this column, said back including, associated with each support device (16), means (20) for fixing this device on the structural column (14),
**characterized in that** said fixing means (20) include a plurality of segments (22, 26) all arranged in one and the same plane substantially orthogonal locally to the column (14), said segments (22, 26) being able to pivot relative to one another on axes of rotation orthogonal to said plane, said plurality of segments including a central segment (22) mounted on the structural column (14), so as to pivot relative thereto, also on an axis of rotation orthogonal to said plane, said support means (20) also including, mounted, respectively, at the two opposite ends of the central segment (22), two lateral segments (26) that can pivot relative to the central segment, and **in that** each support device (16) has sufficient flexibility to be able to deform elastically through the effect of the pressure of the back of an occupant resting on the back.

2. Back according to Claim 1, **characterized in that** each of the lateral segments (26) is mounted at its two opposite ends on the associated support device (16), the two opposite ends of each lateral segment being able preferably to pivot relative to the support device.

3. Back according to either of Claims 1 and 2, **characterized in that** at least one of the segments (22, 26) of the fixing means (20) has sufficient flexibility to deform through the force exerted by the occupant sitting in the seat.

4. Back according to any one of the preceding claims, **characterized in that** the fixing means (20) of each support device (16) adopt a generally rearwardly domed form.

5. Back according to any one of the preceding claims, **characterized in that** said support devices (16) are spaced apart from one another along the structural column (14).

6. Back according to any one of the preceding claims, **characterized in that** each support device (16) has the form of a transverse slat.

7. Back according to Claim 6, **characterized in that** each transverse slat comprises a foam portion (38), preferably surrounding a core of the slat (36).

8. Back according to any one of the preceding claims, **characterized in that** said support devices (16) have no direct contact with said structural column (14).

9. Aircraft seat (1) including a back (4) according to any one of the preceding claims.

10. Aircraft including at least one seat (1) according to Claim 9, preferably a cabin seat.
